# EUROPEAN PATENT SPECIFICATION

(11) **EP 0 706 621 B1**
(45) Date of publication and mention of the grant of the patent: **07.05.1997**
(21) Application number: 94920421.8
(22) Date of filing: 08.07.1994
(51) Int. Cl.: F16F 15/26, B63H 21/30

(54) **A VIBRATION-COMPENSATING APPARATUS FOR COUNTERACTING VIBRATIONS**
SCHWINGUNGEN ENTGEGENWIRKENDE AUSGLEICHSVORRICHTUNG
APPAREIL DE COMPENSATION DE VIBRATIONS

(30) Priority: 09.07.1993 DK 834/93; 22.10.1993 DK 1191/93
(43) Date of publication of application: 17.04.1996
(73) Proprietor: F.L. Smidth & Co. A/S, DK-2500 Valby, Copenhagen (DK)
(72) Inventor: MADSEN, John, Gram, DK-2200 Copenhagen N (DK)
(74) Representative: Jensen, Peter Kim
(86) International application number: DK9400283
(87) International publication number: WO9502133

(56) References cited:
- US-A- 2 325 835
- US-A- 4 936 268
- PATENT ABSTRACTS OF JAPAN, Vol. 10, No. 105, M-471; & JP,A,60 237 239 (MITSUBISHI JUKOGYO K.K.), 26 November 1985 (26.11.85).

## Description

### Technical Field

It is known to compensate the unbalanced moments of the first, second and/or higher order from marine engines by means of a vibration-compensating apparatus. It is furthermore known that such vibration-compensating apparatus also may be used to compensate for other unbalanced forces or moments, for instance from the propellers.

DK-B 155.544 discloses a vibration-compensating apparatus comprising two rotary bodies fixedly mounted on individual vertical shafts arranged mutually parallel. Adjustment of the resulting oscillating force is made by supplying or removing mass from each of the two rotary bodies, which is a quite time-consuming operation.

DK-B-169848 discloses a vibration-compensating apparatus for counteracting unbalanced moments and thereby vibrations generated by an excitation source, such as the main engine of a vessel, and comprising two horizontal shafts arranged parallel in a housing, a rotary body with the same eccentric mass being mounted on each of said shafts, each of said bodies comprising a rotary body part fixedly mounted on the shaft and rotary body part mounted on the shaft releasable for turning, said shafts being interconnected through a transmission so as to rotate in opposite directions and driven synchronously at a rpm being a multiple of the rpm of the excitation source by means of a driving motor for the vibration-compensating apparatus, said motor being controlled by a control and synchronising device. When adjusting the size of the resulting, oscillating force, the releasable rotary body parts are turned relative to the fixed rotary body parts. This requires that the engine turns and thus lifts an eccentric mass at a low speed. In medium sized and large vibration-compensating apparatus, this is a problem, as the engine size for driving the vibration-compensating apparatus at normal operation does not have a sufficiently large torque at low speeds to lift the eccentric mass during the adjustment. This problem can be solved by employing a more powerful engine than required or by employing an engine having a higher rpm and a corresponding transmission. The first solution requires the use of a more expensive engine than necessary, while the latter solution requires the use of an engine which is run down faster due to its higher rpm.

### Disclosure of the Invention

The object of the present invention is to provide a compact and simple vibration-compensating apparatus of the type stated in the introduction, which easy to adjust as regards the size and the direction of the resulting oscillating force.

According to the invention, this is achieved by arranging the apparatus in such a position that the rotary body shafts are arranged essentially vertically according to claim 1. As a result, a compact vibration-compensating apparatus is provided, which can be very easily constructed, as a fairly simple transmission can be used to drive the two rotary bodies in opposite directions so as to generate a resulting force component equal to zero in one direction and in a direction perpendicular thereto a resulting force harmonically varying between zero and twice the force of the eccentric mass of each rotary body. At the same time very little force is needed to alter the position of the releasable rotary body parts relative to the fixed rotary body parts, the unbalanced masses remaining in the same horizontal plane. In practice, it has proved possible to carried out this mutual turning of the rotary body parts of a rotary body manually.

According to the invention, each shaft may at its upper end be provided with a marking for indicating the position of the centre of gravity of the fixed rotary body part. Consequently, it is possible to observe the position of the fixed rotary body parts of the two rotary bodies, which is very advantageous in connection with adjusting the direction of the harmonically oscillating force.

Furthermore, according to the invention, in the transmission between the two shafts, a releasable coupling may be provided allowing one rotary body to turn relative to the other. By turning the two rotary bodies relative to each other, the direction of the harmonically oscillating force is altered. An easily releasable coupling in the transmission between the two shafts simplifies the adjustment of the force direction. The easily releasable coupling may for instance by the shaft/ hub coupling between a gear wheel and the shaft and may be formed of a releasable interference fit, which e.g. may be provided by means of a cone connection formed as a bush, for instance a Taperlock^{tm} bush or a Ringfeder^{tm} bush.

Moreover, according to the invention, one of the rotary body parts of each rotary body may be provided with a graduated scale and the other with a indication line arranged on adjacent portions of the rotary body parts. The position of the rotary body parts of each rotary body may then be read and controlled directly, which facilitates an accurate setting of the rotary body parts of the rotary bodies relative to each other.

In connection with the above, the graduated scale may advantageously be arranged on the periphery of the fixed rotary body part opposite the centre of gravity, and an opening may be provided in the wall of the housing, through which the graduated scale and the indication line may be seen. This embodiment makes it advantageous to control the position of the rotary body parts and to adjust these without separating the vibration-compensating apparatus.

Further, according to the invention, one of the rotary body shafts may be a hollow shaft coaxially arranged on the second shaft, whereby a very compact embodiment of the invention is obtained.

In connection with the above, according to the invention, the vibration-compensating apparatus may further comprise a gear wheel mounted on the hollow shaft and engaging a gear wheel mounted on a pivotal countershaft arranged parallel to the hollow shaft, and a drive connection connected with the driving motor and rotating the second central shaft and the countershaft in the same direction and at the same rpm.

In this connection, it may be advantageous that the drive connection comprises a first pulley mounted on the free end of the inner shaft, a corresponding second pulley mounted on the free end of countershaft, a third pulley mounted on an output shaft of the driving motor, and a belt connecting about three mentioned pulleys.

Moreover, according to the invention, the shafts may be offset relative to each other and the transmission therebetween may comprise two gear wheels in mutual engagement and each mounted on one of the shafts. As a result, a particularly simple embodiment of the invention is obtained, which at present is the most preferred.

Furthermore, according to the invention, in connection with the above embodiment the releasable coupling may be formed of a releasable shaft/hub coupling between at least one of the shafts and one of the gear wheels. As mentioned above, the releasable coupling may be of any known type which enables a quick change of the relative position between the gear wheel and the shaft.

Finally, according to the invention, in a vibration-compensating apparatus with shafts offset relative to each other, the centres of gravity of the two rotary bodies may be arranged in the mutual plane of the shafts, when the resulting force of the vibration-compensating apparatus equals zero. In other words, the centres of gravity of the rotary bodies are arranged in such a manner that the resulting force in the mutual shaft plane equal zero, while the harmonically oscillating force is perpendicular thereto. This embodiment or setting of the rotary bodies is preferable due to the moment.

### Brief Description of the Drawings

The invention is described in greater detail in the following with reference to the accompanying drawings, in which
Fig. 1 is a diagrammatic top view of a first embodiment of a vibration-compensating apparatus according to the invention,
Fig. 2 is sectional view along the line A-A in Fig. 1,
Fig. 3 is diagrammatic sectional view of a preferred embodiment of the invention,
Fig. 4 is a side elevation view of the embodiment of Fig. 3,
Fig. 5 is a diagrammatic top view of an example of the position of the rotary body part of the rotary bodies of the embodiment according to the invention shown in Figs. 3 and 4, and
Fig. 6 illustrates a vibration-compensating apparatus according to the invention used to compensate for vibrations generated by a marine engine.

### Best Mode for Carrying out the Invention

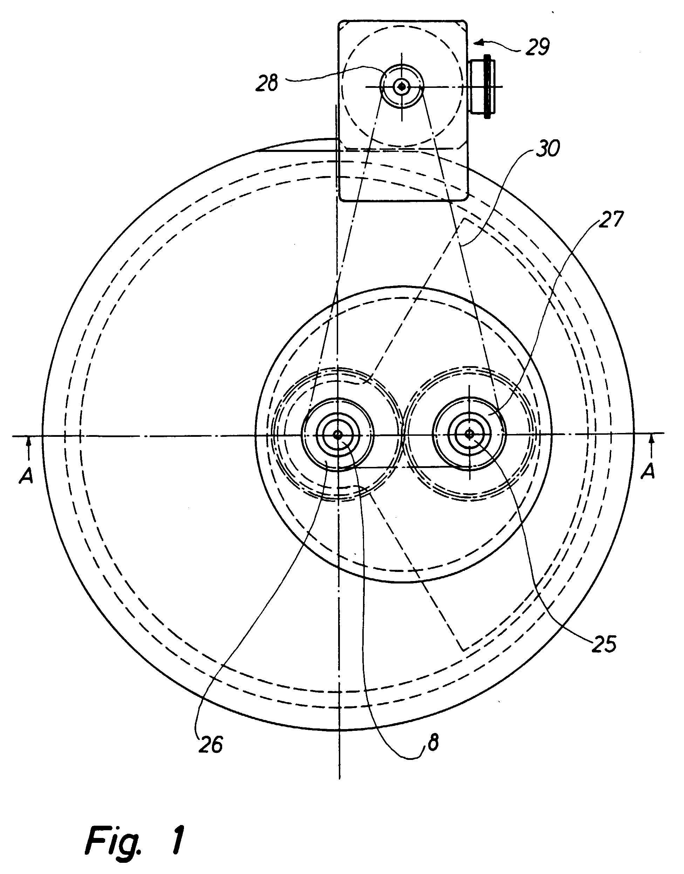

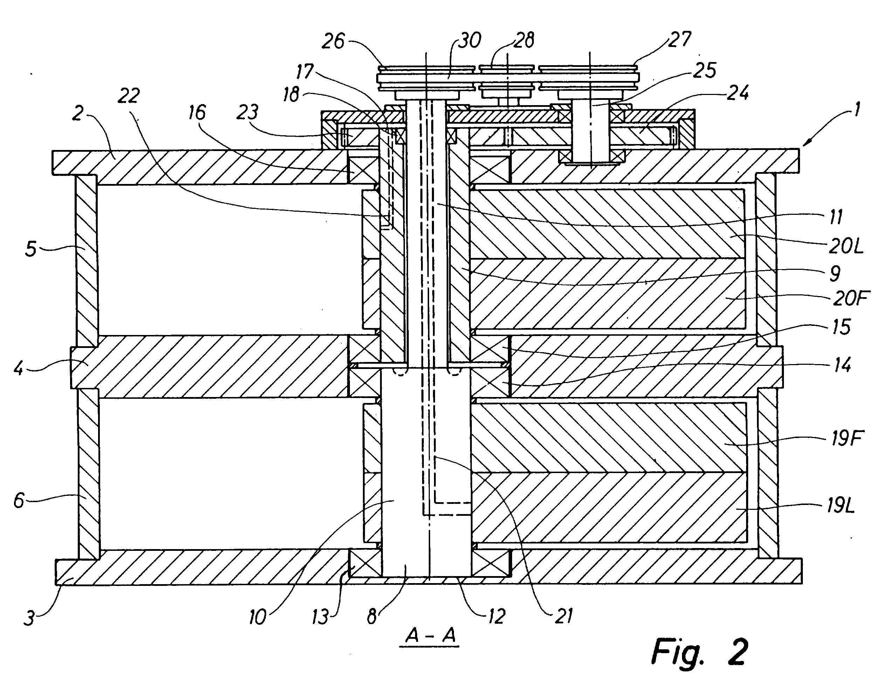

Figs. 1 and 2 show a vibration-compensating apparatus comprising a housing 1 having a first end wall 2, a second end wall 3 and a partition wall 4. Between the first end wall 2 and the partition wall 4 a first circumferential wall 5 is arranged. In a corresponding manner a second circumferential wall 6 is arranged between the partition wall 4 and the end wall 3. The housing 1 is assembled by staybolts (not shown) extending in between the two end walls 2,3. The second end wall 3 forms the base of the housing and is provided with mounting holes (not shown).

A dual shaft comprising an inner central shaft 8 and a hollow shaft 9 arranged pivotally thereon is supported by the end walls 2 and 3 and the partition wall 4 by means of bearings. The central shaft comprises a first shaft portion 10 of a larger diameter and a second shaft portion 11 of a smaller diameter. The hollow shaft 9 is arranged on the small shaft portion 11 of the central shaft 8 and has the same outer diameter as the first shaft portion 10 of the central shaft 8.

At its outer end 12, the large shaft portion 10 of the central shaft 8 is pivotally arranged relative to the other end wall 3 by means of a bearing 13. In the transition area to the second small shaft portion 11, the first shaft portion of the central shaft 8 is pivotally arranged in the partition wall 4 by means of a bearing 14. In a manner corresponding thereto, the hollow shaft 9 is at its lower end pivotally arranged relative to the partition wall 4 by means of a bearing 15, and at its upper end pivotally arranged relative to the upper end wall 2 by means of a bearing 16. Finally, the hollow shaft is pivotally arranged by means of a bearing 18 on the small shaft portion 11 of the central shaft.

In the large shaft portion 10 of the central shaft 8 a rotary body 19 is arranged and being essentially shaped like the sector of a circle when seen in axial direction and thus having an eccentric centre of gravity. The rotary body 19 comprises a rotary body part 19F being fixedly mounted on the large shaft portion 10 of the shaft 8 and a releasably arranged rotary body part 19L being releasable for turning relative to the fixed rotary body part 19F. In a corresponding manner, a rotary body 20 is mounted on the hollow shaft, said body also being shaped like sector of a circle when seen in an axial direction and comprising a rotary body part 20F being fixedly mounted on the shaft and a releasably arranged rotary body part 20L.

The releasably arranged rotary body parts 19L, 20L may be released and turned by supplying pressurised fluid to the mounting area between the shaft and the rotary body part, for instance as disclosed in Danish patent publication DK-B-169 848.

The two shafts 8, 9 are interconnected through a transmission so as to rotate in opposite directions. The transmission comprises a first gear wheel 23 fixed to the hollow shaft 9 at the upper end 17 thereof, and an engaging second gear wheel 24 mounted on a shaft 25.

On the outer end of the small shaft portion 11 of the central shaft 8, a pulley 26 is mounted. A corresponding pulley 27 is mounted on the outer end of the second shaft 25. A third pulley 28 is mounted on the output shaft of a driving motor 29, preferably a servomotor, driving the two pulleys 26,27 in the same direction via a belt 30, whereby the central shaft 8 and the hollow shaft 9 and consequently also the rotary bodies 19,20 connected thereto rotate in opposite directions. As the rotary bodies have the same eccentric mass, a resulting force component of zero is generated in one direction and in a direction perpendicular thereto a harmonic force component is generated which varies between zero and twice the force of each rotary body. As the releasable rotary body part 19L,20L of the rotary bodies may be turned relative to the fixed rotary body part 19F, 20F, the force generated by each rotary body may be regulated and the resulting force component may thereby be adjusted continuously from zero to four time the force of each rotary body part, when said parts have an equal eccentric mass.

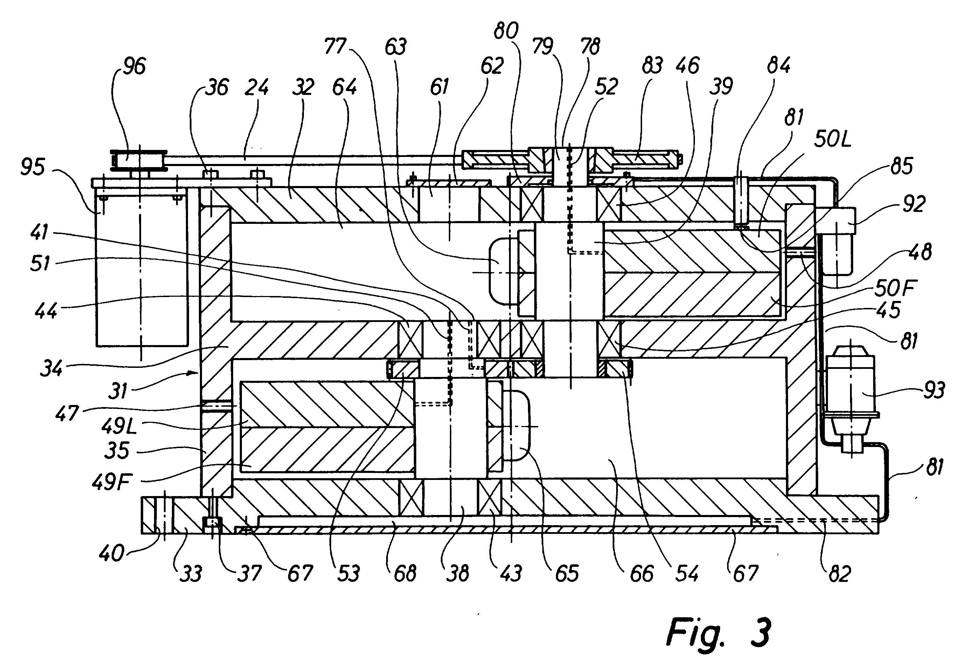

Figs. 3, 4, and 5 illustrate a preferred embodiment of a vibration-compensating apparatus according to the invention comprising a housing 31 having an upper wall 32, a lower wall 33 and a partition wall 34. Furthermore, the housing has a circumferential wall 35. The upper wall 32 is fixed to the circumferential wall 35 by means of screws 36. Correspondingly, the lower wall 33 is fixed to the circumferential wall 35 by means of screws 37. The upper wall 32 is provided with an opening 61 closable by means of a cover 62. The circumferential wall 35 is provided with an upper opening 63 to an upper chamber 64 formed between the upper wall 32 and the partition wall 34, and a lower opening 65 to a lower chamber 66 formed between the partition wall 34 and the lower wall 33. The upper and lower opening 63,65 may also be closed by means of covers (not shown) which are attached to the circumferential wall by means of screw. The lower wall 33 is provided with an outer depression covered by means of a bottom cover 67 to define a oil chamber 68. The bottom cover 67 is fixed to the lower wall 33 by means of screws 69. Finally, mounting holes 40 are provided in the lower wall for bolting the vibration-compensating apparatus to a foundation.

In the lower chamber 66, a lower shaft 38 is pivotally arranged by means of a lower bearing 43 in the lower wall 33 and an upper bearing 44 in the partition wall 34. A rotary body 49 is mounted on the lower shaft 38, said body being shaped essentially like the sector of a circle when seen in axial direction, and thus having an eccentric centre of gravity. The rotary body 49 comprises a rotary body part 49F fixedly mounted on the lower shaft and a releasably mounted rotary body part 49L being releasable for turning relative to the fixed rotary body part 49F.

Correspondingly, in the upper chamber 64 an upper shaft 39 is arranged by means of a lower bearing 45 arranged in the partition wall 34 and an upper bearing 46 arranged in the upper wall 32. On the upper shaft 39 a rotary body part 50F is likewise fixedly mounted and a releasably mounted rotary body part 50L being releasable for turning relative to the fixed rotary body part 50F.

The releasably arranged rotary body parts 49L, 50L may be released and turned relative to the fixed rotary body parts 49F, 50F by supplying pressurised fluid through passages 51,52 to the mounting area between the shaft and the rotary body part, as described in connection with the first embodiment of the invention.

A first threaded hole 47 is provided in the circumferential wall 35, said hole extending into the lower chamber 66 on the level with the releasable rotary body part 49L. Correspondingly, a second threaded hole 48 is provided in circumferential wall 35, said hole extending into the upper chamber 64 on the level with the upper releasable rotary body part 50L. A screw may be screwed into the threaded holes 47,48 to engage the rotary body part 49L, 50L in question in order to retain said part during turning of the other rotary body parts, pressurised fluid being supplied to the passages 51,52, respectively at the same time.

The two shafts are interconnected so as to rotate in opposite directions by means of two gear wheels 53,54 in mutual engagement and arranged in the lower chamber 66. The first gear wheel 53 is releasably arranged at the lower shaft between the bearing 44 and the releasable rotary body part 49L.

The releasable gear wheel 53 may be released for turning by supplying pressurised fluid via a passage 41 to its mounting area on the shaft 38 in a manner corresponding to the manner in which the releasable rotary body parts 49L,50L are released. The releasable gear wheel 53 may, however, be mounted by means of a great number of releasable shaft/hub coupling, such as a so-called Ring-feder^{tm} bush or another connecting means which allows a fast release of the connection between the shaft and the gear wheel mounted thereon. The second gear wheel 54 is fixedly mounted on an end portion of the upper shaft 39 extending into the lower chamber 66.

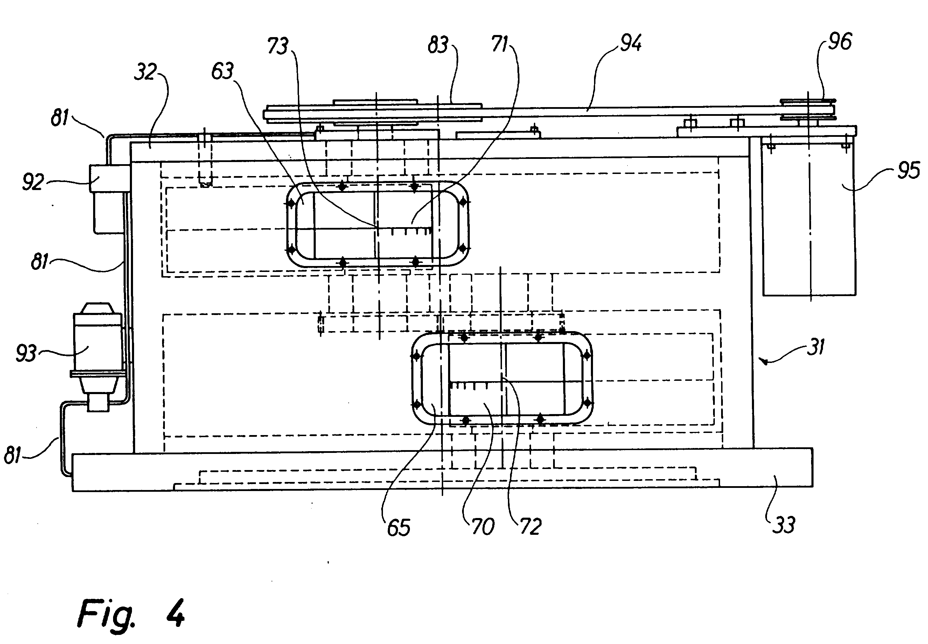

On the periphery opposite the centre of gravity C_{F}, each of the fixed rotary body parts 49F,50F is provided with a graduated scale 70,71 (confer Fig. 4). Correspondingly, each of the releasable rotary body parts 40L,50L is provided with a indication line 72,73 on the periphery opposite the centre of gravity C_{F}. The graduated scale 70,71 extend over 180° and may as the indication line 72,73 be seen through the lower and upper opening 65,63, respectively, in the circumferential wall 35. The indication lines 72,73 and the related graduated scales 70,71 are intended to ensure that the rotary body parts of the rotary bodies 49, 50 are arranged correctly relative to each other.

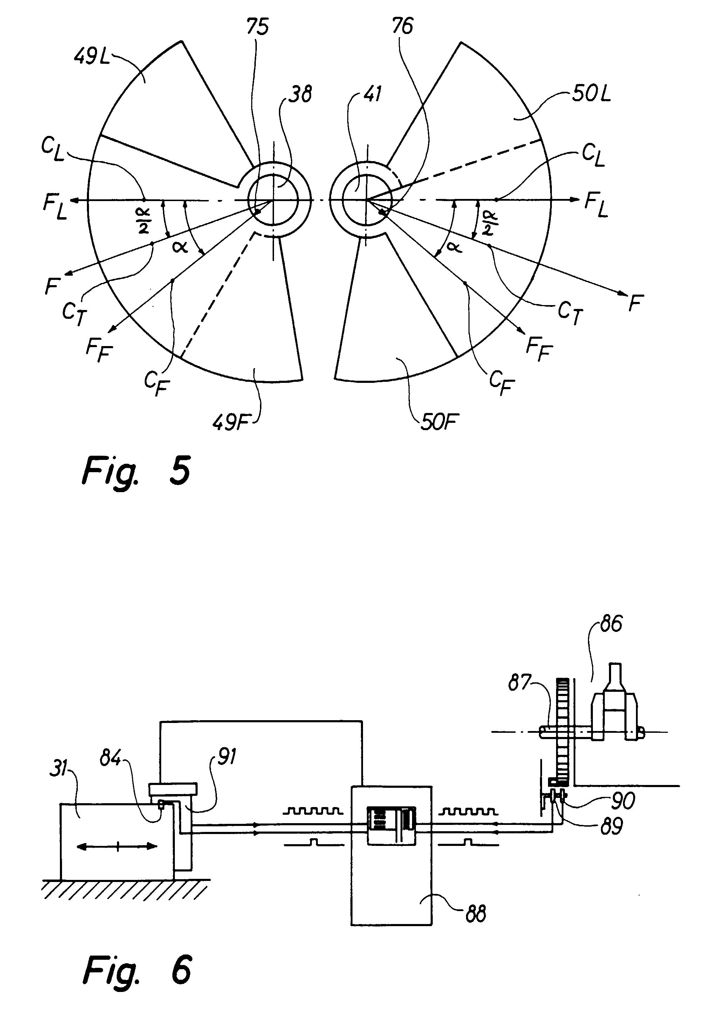

On the visible upwardly facing shaft end faces 77,78, the two shafts 38,39 are provided with an indication marking 75,76 arranged on the radius of the centre of gravity C_{F} of the fixed rotary body part 49F, 50F, confer Fig. 5. As it will appear from below, these indications marks are used, when the direction of the resulting force generated by the vibration-compensating apparatus is to be altered.

The upper shaft 39 comprises an upper shaft end 79, extending through the upper wall 32, and a sealing over 80 fixed to the upper wall 32. A passage is provided in the sealing cover 80 for supplying lubricating oil to the vibration-compensating apparatus. The oil supplied is accumulated in the oil chamber 68 and fed back to the inlet passage via an outlet passage 82 in the lower wall 33 and an oil line 81. An oil filter 92 and oil pump 93 are provided in the oil duct. The lubricating system ensures an effective lubrication of the bearings of the vibration-compensating apparatus and by means of the oil chamber 68 it is obtained that the lower bearing 43 may be drained so it is not submerged in oil. Moreover, on the projecting end of the upper shaft part 79, a pulley 83 is mounted, by means of which the vibration-compensating apparatus is driven via a belt 84 and a motor 95, a pulley 96 being mounted on the output shaft thereof.

Finally, a sensor 84 is provided in the upper wall 32 sensing the passage of a screw head 85 of a screw screwed into the releasable rotary body part 50L of the upper rotary body. The sensor 84 serves to continuously register a point of reference for the cyclic movement of the vibration-compensating apparatus.

With reference to Fig. 6, the control and adjustment of a vibration-compensating apparatus according to the invention is explained in details, the vibration-compensating apparatus in the example being used to counteract vibrations generated by a main engine of a vessel or another excitation source on the vessel.

When adjusting the vibration-compensating apparatus - in this example illustrated by means of its housing 31 - on a vessel, the phase angle between the excitation source, for which the apparatus is to compensate, and a point of reference on the cycle of the engine 86 are measured or estimated. The reference point of the engine 86 may typically be the top dead-centre of the first cylinder measured on the main shaft 87. The position and the speed of the reference point is registered continuously by the synchronising device 88 by means of a position sensor 89 and a pulse train sensor 90. The signals measured on the main shaft 86 is compared to a position measurement made by means of the sensor 84 in the housing 31 and a velocity measurement of the driving motor 91 of the vibration-compensating apparatus. Based thereon the rpm of the driving motor 91 is effected continuously, whereby the vibration-compensating apparatus runs synchronously and at the desired phased angle relative to the main engine and thereby the excitation source. Based on the phase angle of the excitation source and under consideration of the different rmps for the engine 86 and the vibration-compensating apparatus and the position of the sensor 84 of the vibration-compensating apparatus relative to the force direction thereof, the synchronising device 88 may be adjusted in such a manner that the force from the vibration-compensating apparatus is in antiphase and varies synchronously with the excitation source. When the force direction is adjusted correctly, the phase is the same, whether the vibration-compensating apparatus is active or inactive, but the size of the vibration amplitude is of course reduced, when the vibration-compensating apparatus is active.

The size of the force is determined by employing the vibration-compensating apparatus as an oscillator or exciter when the engine of the vessel is stopped and vice versa. Based thereon, the vibration-compensating apparatus is adjusted to the force giving the same amplitude as the excitation source present at the given place on the vessel.

The force of the vibration-compensating apparatus is adjusted by turning the two fixed rotary body parts 49F, 50F relative to the releasable rotary body parts 49L, 50L, the parts being turned in opposite directions, confer Fig. 5. Subsequent to the adjustment, the resulting force F is the sum of the two forces F_{L}, F_{F} from a fixed and from a releasable rotary body part 49F, 49L; 50F, 50L acting on a line of application at haft the angle α/2 of the angle α over which the two rotary body parts 49F, 50F have been turned relative to each other. The method of adjustment is initially to retain one of the releasable rotary body parts, for instance 49L, by screwing a screw into the threaded hole 47 to engage the releasable rotary body part 49L and subsequently to supply pressurised fluid via the passage 51 in the shaft 38 to the mounting area between the rotary body part 49F and the shaft. By relieving the interference fit between the shaft and the rotary body part, the three other rotary body parts may be turned to a new position. The method is then used to change the position of the upper releasable rotary body part 50L relative to the other rotary body parts. In order to obtain balance in the forces from the two shafts, it is to be ensured that the two fixed rotary body parts 49F, 50F are turned equally relative to the releasable rotary body parts 49L, 50L. The graduated scale 70,71 on the fixed rotary body parts and the indication lines 72,73 on the releasable rotary body parts can be used for this purpose. During the adjustment of the position of the rotary body parts, the releasable body parts 49L, 50L is retained in a position, in which said graduated scales and marking lines can be seen through the openings 63,65 in the circumferential wall 35 of the housing 31.

Having adjusted the force size, the phase angle in the synchronising device 88 is changed by haft the yaw angle α/2. Furthermore, after adjusting the force size, the phase angle in the synchronising device is changed in accordance with the angle, over which the releasable rotary body part 50L has been turned at the change of the force size, i.e. the angle over which the screw head 85 for the position sensor 84 has been turned.

The direction of the harmonically varying force of the vibration-compensating apparatus is determined by the relative position between the two fixed rotary body parts 49F, 50F. In order to control the position of the rotary body parts from the outside, a marking 75,76 is provided on the upwardly facing shaft end faces 77,78, said marking indicating the line of application of the force of the fixed rotary body part relative to the shaft. The shaft end face 77 of the lower shaft can be seen through the opening 61.

The releasable connection between the lower shaft 38 and the gear wheel 53 makes it possible to adjust the force direction of the oscillating force arbitrarily by turning the lowermost shaft 39 to the desired force direction, loosen the connection between the shaft 38 and the gear wheel 53 by supplying pressurised fluid to the passage 41, and by turning the fixed rotary body part 50F on the upper shaft 39 until the indication marking 76 on the shaft end face 78 thereof has the same direction as the indication marking 75 on the shaft end face 77 of the lower shaft 38. Having adjusted the force direction, the phase angle in the synchronising device is changed to correspond to the angle to which the upper releasable rotary body part 50L has been turned at the change of the force direction, i.e. the angle over which the screw head 85 for the position sensor 84 has been turned.

When the force direction has been determined, it may be advantageous due to the inner moment in the vibration-compensating apparatus to turn the rotary bodies in such a manner that the harmonically varying force of the vibration-compensating apparatus is perpendicular to the mutual plane of the shafts and correspondingly to turn the entire vibration-compensating apparatus on the foundation in such a manner that the force is active in the direction just determined.

## Claims

1. The use of a vibration-compensating apparatus for counteracting unbalanced moments and thereby vibrations generated by an excitation source, such as the main engine of a vessel, and comprising two shafts (8,9;38,39) arranged parallelly in a housing, a rotary body (19,20;49,50) with the same eccentric mass being mounted on each of said shafts, each of said bodies comprising a rotary body part (19F,20F; 49F, 50F) fixedly mounted on the shaft and a rotary body part (19L, 20L, 49L, 50L) mounted on the shaft releasable for turning, said shafts being interconnected through a transmission so as to rotate in opposite directions and driven synchronously at a rpm being a multiple of the rpm of the excitation source by means of a driving motor (91) for the vibration-compensating apparatus, said motor (91) being controlled by a control and synchronising device, whereby said apparatus is arranged for use in such a position that the shafts (8,9;38,39) of the rotary bodies are arranged essentially vertically.

2. The use as claimed in claim 1, wherein each shaft (38,39) at its upper end is provided with a marking (75,76) for indicating the position of the centre of gravity (C_{F}) of the fixed rotary body part (49F, 50F).

3. The use as claimed in claim 1 or 2, wherein the transmission between the two shafts (38,39) a releasable coupling (92) is provided allowing one rotary body (49) to turn relative to the other.

4. The use as claimed in one or more of the preceding claims, wherein one of the rotary body parts (49F,50F) of each rotary body (49,50) is provided with a graduated scale (70,71) and the other with a indication line (72,73) arranged on adjacent portions of the rotary body parts.

5. The use as claimed 4, wherein the graduated scale (70,71) is arranged on the periphery of the fixed rotary body part (49F,50F) opposite the centre of gravity (C_{F}), and an opening (63,65) is provided in wall (35) of the housing, through which the graduated scale (70,71) and the indication line (72,73) may be seen.

6. The use as claimed in one or more of the preceding claims, wherein one of the rotary body shafts is a hollow shaft (9) coaxially arranged on the second shaft (8).

7. The use as claimed in claim 6, wherein the apparatus comprises a gear wheel (23) mounted on the hollow shaft (9), said wheel engaging a gear wheel (24) mounted on a pivotal countershaft (25) arranged parallel to the hollow shaft (9), and a drive connection connected with the driving motor and rotating the second central shaft (8) and the countershaft (25) in the same direction and at the same rpm.

8. The use as claimed in one or more of the claims 1 to 5, wherein the shafts are offset in relation to each other and transmission therebetween comprises two gear wheels (53,54) in mutual engagement and each mounted on one of the shafts (38,39).

9. The use as claimed in one or more the claims 1 to 6 and claim 8, wherein the releasable coupling is formed of a releasable shaft/hub coupling between at least one of the shafts (38) and one of the gear wheels (53).

10. The use as claimed in one or more of the claims 1 to 6 and claims 9, wherein the shafts are offset in relation to each other and the centres of gravity (C_{T}) of the two rotary bodies (49,50) are arranged in the mutual plane of the shafts (38,39), when the resulting force of the vibration-compensating apparatus equals zero.

## Patentansprüche

1. Die Verwendung einer Schwingungs-Ausgleichsvorrichtung zum Entgegenwirken nicht ausgeglichener Momente und damit Schwingungen, die von einer Erregerquelle, wie dem Hauptmotor eines Schiffes, erzeugt werden, umfaßt zwei Wellen (8, 9; 38, 39), die parallel in einem Gehäuse angeordnet sind, wobei ein Drehkörper (19, 20; 49, 50) mit der gleichen exzentrischen Masse an jeder der Wellen befestigt ist, wobei jeder Drehkörper ein Drehkörperteil (19F, 20F; 49F, 50F) umfaßt, das an der Welle fest befestigt ist, und ein Drehkörperteil (19L, 20L; 49L, 50L), das an der Welle lösbar zum Drehen befestigt ist, wobei die Wellen durch eine Übertragung miteinander verbunden sind, so daß sie sich in entgegengesetzten Richtungen drehen und synchron bei einer "rpm" bzw. Drehzahl pro Minute, die ein Vielfaches der "rpm" bzw. Drehzahl pro Minute der Erregerquelle ist, mittels eines Antriebsmotors (91) für die Schwingungs-Ausgleichsvorrichtung angetrieben werden, wobei der Motor (91) von einer Steuer- und Synchronisiereinrichtung gesteuert wird, wobei die Vorrichtung für den Einsatz in solch einer Position angeordnet ist, daß die Wellen (8, 9; 38, 39) der Drehkörper im wesentlichen vertikal angeordnet sind.

2. Die Verwendung nach Anspruch 1, dadurch gekennzeichnet, daß jede Welle (38, 39) an ihrem oberen Ende mit einer Markierung (75, 76) zum Kennzeichnen der Position des Schwerpunktes (C_{F}) des festen Drehkörperteils (49F, 50F) versehen ist.

3. Die Verwendung nach Anspruch 1 oder 2, dadurch gekennzeichnet, daß in der Übertragung zwischen den zwei Wellen (38, 39) eine lösbare Kupplung (92) vorgesehen ist, die einem Drehkörper (49) gestattet, sich relativ zu dem anderen zu drehen.

4. Die Verwendung nach einem oder mehreren der vorhergehenden Ansprüche, dadurch gekennzeichnet, daß eines der Drehkörperteile (49F, 50F) jedes Drehkörpers (49, 50) mit einer kalibrierten Skala (70, 71) versehen ist und das andere mit einer Kennzeichnungslinie (72, 73), die an benachbarten Abschnitten der Drehkörperteile angeordnet sind.

5. Die Verwendung nach Anspruch 4, dadurch gekennzeichnet, daß die kalibrierte Skala (70, 71) an dem Umfang des festen Drehkörperteils (49F, 50F), dem Schwerpunkt (C_{F}) gegenüberliegend angeordnet ist, und eine Öffnung (63, 65) in einer Wand (35) des Gehäuses vorgesehen ist, durch welche die kalibrierte Skala (70, 71) und die Kennzeichnungslinie (72, 73) gesehen werden kann.

6. Die Verwendung nach einem oder mehreren der vorhergehenden Ansprüche, dadurch gekennzeichnet, daß eine der Drehkörperwellen eine hohle Welle (9) ist, die auf der zweiten Welle (8) koaxial angeordnet ist.

7. Die Verwendung nach Anspruch 6, dadurch gekennzeichnet, daß die Vorrichtung ein Zahnrad (23) umfaßt, das auf der hohlen Welle (9) befestigt ist, wobei das Rad ein Zahnrad (24) in Eingriff nimmt, das auf einer drehbaren, versenkten Welle (25) befestigt ist, die parallel zu der hohlen Welle (9) angeordnet ist, und eine Antriebsverbindung, die mit dem Antriebsmotor verbunden ist und die zweite zentrale Welle (8) und die versenkte Welle (25) in der gleichen Richtung und bei der gleichen "rpm" bzw. Drehzahl pro Minute antreibt.

8. Die Verwendung nach einem oder mehreren der Ansprüche 1 bis 5, dadurch gekennzeichnet, daß die Wellen in Bezug zueinander versetzt sind und die Übertragung dazwischen zwei Zahnräder (53, 54) im gegenseitigen Eingriff und jeweils auf einer der Wellen (38, 39) befestigt umfaßt.

9. Die Verwendung nach einem oder mehreren der Ansprüche 1 bis 6 und Anspruch 8, dadurch gekennzeichnet, daß die lösbare Kupplung aus einer lösbaren Wellen-/Nabenkupplung zwischen wenigstens einer der Wellen (38) und einem der Zahnräder (53) ausgebildet ist.

10. Die Verwendung nach einem oder mehreren der vorhergehenden Ansprüche 1 bis 6 und Anspruch 9, dadurch gekennzeichnet, daß die Wellen in versetzter Beziehung zueinander stehen und die Schwerpunkte (C_{T}) der zwei Drehkörper (49, 50) in der gemeinsamen Ebene der Wellen (38, 39) angeordnet sind, wenn die resultierende Kraft der Schwingungs-Ausgleichsvorrichtung gleich null ist.

## Revendications

1. Utilisation d'un appareil de compensation de vibrations pour contrecarrer les moments de désiquilibre et ainsi les vibrations générées par une source d'excitation, telle que le moteur principal d'un bateau, et comprenant deux axes (8, 9 ; 38, 39) disposés parallèlement dans un bâti, un corps rotatif (19, 20 ; 49, 50) avec la même masse excentrique qui est monté sur chacun desdits axes, chacun desdits corps comprenant une partie de corps rotatif (19F, 20F ; 49F, 50F) montée fixement sur l'axe et une partie de corps rotatif (19L, 20L, 49L, 50L) montée libre sur l'axe pour pivoter, lesdits axes étant inter-connectés par le biais d'une transmission de manière à tourner dans des directions opposées et de manière synchrone à un régime en tpm étant un multiple du régime en tpm de la source d'excitation au moyen d'un moteur d'entraînement (91) pour l'appareil de compensation de vibrations, ledit moteur (91) étant commandé par un dispositif de commande et de synchronisation, dans laquelle ledit appareil est disposé pour une utilisation dans une position telle que les axes (8, 9 ; 38, 39) des corps rotatifs sont disposés essentiellement verticalement.

2. Utilisation selon la revendication 1, dans laquelle chaque axe (38, 39) est muni à son extrémité supérieure d'un marquage (75, 76) pour indiquer la position du centre de gravité (C_{F}) de la partie de corps rotative fixée (49F, 50F).

3. Utilisation selon la revendication 1 ou 2, dans laquelle un moyen d'accouplement libérable est prévu dans la transmission entre les deux axes (38, 39) pour permettre à un corps rotatif (49) de tourner par rapport à l'autre.

4. Utilisation selon l'une ou plusieurs des revendications précédentes, dans laquelle une des parties du corps rotatif (49F, 50F) de chaque corps rotatif (49, 50) est munie d'une échelle graduée (70, 71) et l'autre d'une ligne d'indication (72, 73) disposées sur des portions adjacentes des parties de corps rotatif.

5. Utilisation selon la revendication 4, dans laquelle l'échelle graduée (70, 71) est disposée sur la périphérie de la partie de corps rotatif fixée (49F, 50F) opposée au centre de gravité (C_{F}), et une ouverture (63, 65) est prévue dans la paroi (35) du bâti, à travers laquelle l'échelle graduée (70, 71) et la ligne d'indication (72, 73) peuvent être vues.

6. Utilisation selon l'une ou plusieurs des revendications précédentes, dans laquelle un des axes des corps rotatifs est un axe creux (9) disposé coaxialement sur le second axe (8).

7. Utilisation selon la revendication 6, dans laquelle l'appareil comprend une roue d'engrenage (23) montée sur l'arbre creux (9), ladite roue engrenant une roue d'engrenage (24) montée sur un arbre de transmission pivotant (25) disposé parallèlement à l'arbre creux (9) et une liaison d'entraînement liée au moteur d'entraînement et entraînant en rotation le second axe central (8) et l'axe de transmission (25) dans la même direction et au même régime en tpm.

8. Utilisation selon l'une ou plusieurs des revendications 1 à 5, dans laquelle les axes sont désaxés l'un par rapport à l'autre et la transmission entre eux comprend deux roues d'engrenage (53, 54) engrenant mutuellement et chacune montée sur un des axes (38, 39).

9. Utilisation selon l'une ou plusieurs des revendications 1 à 6 et la revendication 8, dans laquelle l'accouplement libérable est formé d'un accouplement moyeu/axe libérable entre au moins un des axes (38) et une des roues d'engrenage (53).

10. Utilisation selon l'une ou plusieurs des revendications 1 à 6 et selon la revendication 9, dans laquelle les axes sont désaxés l'un par rapport à l'autre et les centres de gravité (C_{T}) des deux corps rotatifs (49, 50) sont disposés dans le plan mutuel des axes (38, 39) quand la force résultante de l'appareil de compensation de vibrations est égal à zéro.
